# EUROPEAN PATENT APPLICATION

(11) **EP 4 305 969 A1**
(43) Date of publication of application: **17.01.2024**
(21) Application number: 22784631.8
(22) Date of filing: 31.03.2022
(51) Int. Cl.: A23J 3/00, A23J 3/14, A23L 5/00, A23L 15/00

(54) **LIQUID EGG-SUBSTITUTE COMPOSITION AND HEAT-COAGULATED SUBSTANCE**

(30) Priority: 07.04.2021 JP 2021065281
(71) Applicant: Kewpie Corporation, Tokyo 150-0002 (JP)
(72) Inventor: SUZUKI, Takahisa, Chofu-shi, Tokyo 182-0002 (JP); ISOBE, Kazuhiro, Chofu-shi, Tokyo 182-0002 (JP); SHIRAISHI, Atsushi, Chofu-shi, Tokyo 182-0002 (JP)
(74) Representative: Winter, Brandl - Partnerschaft mbB
(86) International application number: PCT/JP2022/016554
(87) International publication number: WO 2022/215647

(57) **Abstract**

There is provided a liquid egg-substitute composition that has fluidity close to that of a liquid egg and is capable of obtaining a gelation property, color tone, and flavor that are capable of reproducing a heat-coagulated egg when heated, and a heat-coagulated product thereof.

[Solving Means] A liquid egg-substitute composition according to the present invention contains 6 mass% or more and 17 mass% or less of an extracted protein of a bean of the species white Phaseolus vulgaris or the species Vigna mungo.

## Description

### Technical Field

The present invention relates to a liquid egg-substitute composition that can be used as a liquid egg substitute and a heat-coagulated product thereof.

### Background Art

A cooked egg product such as a scrambled egg obtained by heating and coagulating a liquid egg has been eaten favorably because of their rich flavor unique to eggs, bright colors, and the like. Meanwhile, in recent years, there has been a request to enjoy foods like a cooked egg product that does not use eggs, due to concerns about health and growing preference for plant-based foods.

Patent Literature 1 describes an egg replacer including a purified mung bean protein isolate, characterized by having one or more organoleptic properties similar to those of eggs.

Patent Literature 2 describes an egg replacer including a purified adzuki bean protein isolate, characterized by having one or more organoleptic properties similar to those of eggs.

Patent Literature 3 describes a powder composition for replacing eggs, characterized by including a soybean protein material and oxidized starch.

### Citation List

### Patent Literature

Patent Literature 1: Japanese Unexamined Patent Application Publication No. 2019-509036
Patent Literature 2: Japanese Unexamined Patent Application Publication No. 2019-505226
Patent Literature 3: Japanese Patent Application Laid-open No. 2018-038318

### Summary of Invention

### Problem to be solved by the Invention

Meanwhile, there is a need for a liquid egg substitute that can be handled in the same way as liquid eggs and is capable of obtaining a gelation property, color tone, and flavor close to those of heat-coagulated eggs when heated.

In view of the circumstances as described above, it is an object of the present invention to provide a liquid egg-substitute composition that has fluidity close to that of a liquid egg and is capable of obtaining a gelation property, color tone, and flavor that are capable of reproducing a heat-coagulated egg when heated, and a heat-coagulated product thereof.

### Means for solving the Problem

In order to achieve the above-mentioned object, the present inventors have extensively studied a liquid egg-substitute composition containing no egg or a small amount of egg. The present inventors have investigated using a plurality of types of beans, found that an extracted protein of a bean of the species white Phaseolus vulgaris or the species Vigna mungo is capable of particularly faithfully reproducing a liquid egg and a heat-coagulated egg obtained by heating the liquid egg, and completed the present invention.

That is, the present invention is
(1) A liquid egg-substitute composition, including:
   6 mass% or more and 17 mass% or less of an extracted protein of a bean of a species white Phaseolus vulgaris or a species Vigna mungo.
(2) The liquid egg-substitute composition according to (1), in which
   the bean is a bean of the species white Phaseolus vulgaris.
(3) The liquid egg-substitute composition according to (2), in which
   the bean is an otebo bean.
(4) The liquid egg-substitute composition according to any one of (1) to (3), further including 3 mass% or more and 15 mass% or less of a lipid.
(5) The liquid egg-substitute composition according to any one of (1) to (4), further including
   a fat-soluble colorant.

A heat-coagulated product of the liquid egg-substitute composition according to any one of (1) to (5) .

### Effects of the Invention

According to the present invention, it is possible to provide a liquid egg-substitute composition that has fluidity close to that of a liquid egg and is capable of obtaining a gelation property, color tone, and flavor that are capable of reproducing a heat-coagulated egg when heated, and a heat-coagulated product thereof.

### Mode(s) for Carrying Out the Invention

The present invention will be described below in detail. Note that in the present invention, "%" means "mass%".

### <Liquid egg-substitute composition>

A liquid egg-substitute composition according to the present invention is a liquid egg-substitute composition containing no egg or a small amount of egg, characterized by containing 6 mass% or more and 17 mass% or less of an extracted protein of a bean of the species white Phaseolus vulgaris or the species Vigna mungo.

The liquid egg-substitute composition according to the present invention has properties closer to those of liquid eggs in an unheated state and is capable of preparing a cooked product like a heat-coagulated egg that has been gelled when heated. As a result, the liquid egg-substitute composition according to the present invention can be used as a liquid egg substitute.

The phrase "containing no egg" means that it does not contain a raw material derived from eggs of birds generally used for food, such as eggs of chicken, quail, and duck, and the phrase "containing a small amount of egg" means that it contains 5% or less, favorably 3% or less, and more favorably 1% or less of the raw material derived from eggs of birds in the liquid egg-substitute composition.

Beans are plant-based foods with a relatively high content of protein. The present inventors have focused on the protein of the bean as a liquid egg substitute for preparing a heat-coagulated egg and investigated using proteins extracted from many types of beans. As a result, the present inventors have found that a material containing an extracted protein of a bean of the species white Phaseolus vulgaris or the species Vigna mungo is capable of more faithfully reproducing a liquid egg and a heat-coagulated egg and is particularly excellent as the substitute described above, as compared with other types of beans.

### <Liquid egg>

In the present invention, a liquid egg refers to an unheated liquid egg obtained by uniformly mixing liquid egg white and liquid egg yolk obtained by cracking eggs of birds generally used for food.

Since the liquid egg has fluidity and heat coagulability, the liquid egg substitute is desired to have fluidity and heat coagulability equivalent to those of the liquid egg.

### <Heat-coagulated product>

A heat-coagulated product according the present invention refers to a heat-coagulated product of the liquid egg-substitute composition according to the present invention. The heat-coagulated product is obtained by heating the liquid egg-substitute composition by a frying pan, a hot water bath, or another appropriate method to solidify (be made gelled). The heat-coagulated product according to the present invention can be used as a heat-coagulated egg substitute.

### <Heat-coagulated egg>

In the present invention, the heat-coagulated egg means a heat-coagulated product of the liquid egg. The heat-coagulated egg is gelatinous with elasticity, and has bright yellow color tone and unique flavor. For this reason, the heat-coagulated egg substitute is desired to gelatinous and have bright yellow color tone and flavor close to that of the heat-coagulated egg.

Examples of the cooked product including a heat-coagulated egg include a scrambled egg, an omelet, a fried egg, a soboro (fine scrambled egg), an usuyaki tamago (thin omelet), a kinshi tamago (thinly sliced egg), and a cooked product including these.

### <Extracted protein of bean>

The liquid egg-substitute composition according to the present invention is characterized by containing an extracted protein of a bean of the species white Phaseolus vulgaris or the species Vigna mungo.

The bean according to the present invention refers to the seed of the leguminous plants described above.

The extracted protein of a bean according to the present invention refers to a protein extracted from a bean. In other words, the extracted protein refers to a protein as an extract of a bean.

The liquid egg-substitute composition according to the present invention has sufficient fluidity by containing a predetermined amount of the extracted protein of a bean, and can be handles in the same way as the liquid egg.

Further, the extracted protein of a bean of the species white Phaseolus vulgaris or the species Vigna mungo is capable of exhibiting a sufficient gelation property by heating, which makes it easier to obtain a gelatinous coagulum similar to the heat-coagulated egg. As a result, it is possible to refrain from adding a gelling agent or limit the amount of a gelling agent to be added, and suppress the production cost. Further, it is possible to suppress the reduction in fluidity of a liquid-egg-like composition, deterioration of the texture of the heat-coagulated product, and the like due to addition of a large amount of the gelling agent. Further, it is possible to refrain from performing treatment of enhancing the gelation property such as enzyme treatment or shorten the time for the treatment, improve the production efficiency, and suppress the increase in production cost.

Further, the extracted protein of a bean has white or white-based light color tone. This makes it easier to reproduce yellow color tone close to that of the heat-coagulated egg, as compared with the extracted protein of a bean having dark color tone such as brown, black, and gray.

Further, the heat-coagulated product of the liquid egg-substitute composition according to the present invention has less beany flavor as compared with the heat-coagulated product including another type of bean. As a result, a heat-coagulated product having flavor closer to that of the heat-coagulated egg can be obtained.

As described above, the liquid egg-substitute composition according to the present invention has all the properties of fluidity required as a liquid egg substitute, and a sufficient gelation property, light color tone, and favorable flavor required as a heat-coagulated egg substitute. Therefore, according to the present invention, it is possible to obtain a liquid egg-substitute composition having more excellent properties as a liquid egg substitute for preparing a heat-coagulated egg, as compared with the case of using another type of bean.

### <Species white Phaseolus vulgaris>

In the present invention, the species white Phaseolus vulgaris means a plant of the brand classified as a white plant, of plants of the species Phaseolus vulgaris (P. Vugaris) belonging to the genus Phaseolus in the family Fabaceae.

Specifically, examples of the bean of the species white Phaseolus vulgaris include an otebo bean, an Alubia bean, a shiro-kintoki-mame (white red kidney bean), a great northern bean, a navy bean, and a Cannellini bean.

Note that examples of a bean of the species colored Phaseolus vulgaris include a kintoki-mame (Japanese red kidney bean), a red kidney bean, a quail bean, and a toramame (tiger bean), but these beans are not included in the bean of a "species white Phaseolus vulgaris" according to the present invention.

By using the bean of the species white Phaseolus vulgaris, it is possible to obtain a liquid egg-substitute composition that satisfies all of the above-mentioned conditions of fluidity, a sufficient gelation property by heating, light color tone, and favorable flavor. Further, the bean of the species white Phaseolus vulgaris can be obtained relatively easily, and the liquid egg-substitute composition according to the present invention can be stably prepared.

### <Otebo bean>

The liquid egg-substitute composition according to the present invention favorably contains an extracted protein of an otebo bean (a white kidney bean) that is a bean of the species white Phaseolus vulgaris. By using the otebo bean, a particularly excellent liquid egg-substitute composition that sufficiently satisfies all of the conditions of fluidity, a gelation property by heating, light color tone, and favorable flavor can be obtained as shown in the Example described below. Further, the otebo bean is sufficiently distributed and can be obtained relatively easily. Therefore, by using the otebo bean, it is possible to stably prepare a liquid egg-substitute composition capable of faithfully reproducing a heat-coagulated egg.

### <Species Vigna mungo>

In the present invention, the species Vigna mungo means a plant of the species Vigna mungo (V. Mungo) belonging to the genus Vigna in the family Fabaceae.

Specifically, examples of the bean of the species Vigna mungo include a black gram bean (black matpe).

Also by using the bean of the species Vigna mungo, it is possible to obtain a liquid egg-substitute composition that satisfies all of the above-mentioned conditions of fluidity, a gelation property by heating, light color tone, and favorable flavor.

### <Content of extracted protein of bean>

The liquid egg-substitute composition according to the present invention contains 6 mass% or more and 17 mass% or less of the extracted protein of a bean. By containing 6 mass% or more of the extracted protein of a bean, a sufficient gelation property can be obtained after heating. By containing 17 mass% or less of the extracted protein of a bean, fluidity similar to or close to that of the liquid egg can be obtained in the state of the liquid egg-substitute composition before heating.

Further, the liquid egg-substitute composition according to the present invention favorably contains 7 mass% or more, more favorably 8 mass% or more, of the extracted protein of a bean from the viewpoint of obtaining a more sufficient gelation property after heating. Further, the liquid egg-substitute composition according to the present invention favorably contains 15 mass% or less, more favorably 13 mass% or less, of the extracted protein of a bean from the viewpoint of obtaining more sufficient fluidity.

### <Lipid>

The liquid egg-substitute composition according to the present invention favorably further contains 3 mass% or more and 15 mass% or less of a lipid. As a result, the composition of the liquid egg-substitute composition can be made closer to the composition of the liquid egg, and it becomes easy to feel the richness close to that of the heat-coagulated egg after heating. Further, the liquid egg-substitute composition according to the present invention favorably contains 4 mass% or more of a lipid, and favorably contains 12 mass% or less, more favorably contains 10 mass% or less, of a lipid.

The liquid egg-substitute composition according to the present invention favorably contains edible fats and oils from the viewpoint of adjusting the content of a lipid to the range described above. Examples of the edible fats and oils include animal and vegetable oils, refined oils thereof, and fats and oils obtained through chemical or enzymatic treatment. Examples of the animal and vegetable oils include rapeseed oil, corn oil, cottonseed oil, safflower oil, olive oil, safflower oil, soybean oil, palm oil, milk fat, beef tallow, lard, and egg yolk oil. Examples of the fats and oils obtained through chemical or enzymatic treatment include MCT (medium chain fatty acid triglyceride), diglyceride, hydrogenated oil, enzyme-treated egg yolk oil. These edible fats and oils may be used alone or two or more of them may be used in combination.

### <Colorant>

The liquid egg-substitute composition according to the present invention favorably contains a colorant, more favorably a fat-soluble colorant, in order to obtain color tone close to that of the heat-coagulated egg after heating.

The fat-soluble colorant refers to a component that is fat-soluble and can be colored. The fat-soluble colorant may be in the form of oil, or may be in the form of powder or emulsified emulsion.

Examples of the fat-soluble colorant according to the present invention include yellow, orange, and red colorants, specifically, paprika oil, palm olein, capsicum oil, carrot oil, orange oil, a marigold pigment, β-carotene, and a turmeric pigment. These colorants may be used alone or two or more of them may be used in combination.

By adding the fat-soluble colorant to the liquid egg-substitute composition containing the extracted protein of a light-colored bean, it is possible to produce bright and stable color after heating and it is easier to obtain color tine close to that of the heat-coagulated egg.

The fat-soluble colorant according to the present invention favorably contains at least one of paprika oil or palm olein, and particularly favorably contains paprika oil. This makes it easier to obtain color tone closer to that of the heat-coagulated egg. Note that palm olein is also used as edible fats and oils, and can be used as a component for coloring in the present invention.

Further, the fat-soluble colorant according to the present invention more favorably contains both paprika oil and palm olein. This makes it easier to obtain color tone closer to that of the heat-coagulated egg.

The content of the colorant according to the present invention can be appropriately adjusted in accordance with the type of colorant, the color tone of the extracted protein of a bean, or the like, but is favorably 0.1 mass% or more, more favorably 0.5 mass% or more, and favorably 5 mass% or less, and more favorably 3 mass% or less, for example.

### <Gelling agent>

In the liquid egg-substitute composition according to the present invention, the protein itself of a bean has a favorable gelation property as described above, but the liquid egg-substitute composition may further contain a gelling agent in order to supplement the gelation property of the extracted protein of a bean and obtain a texture closer to that of the heat-coagulated egg. Examples of the gelling agent used in the present invention include gum, pectin, curdlan, pullulan, mannan, agar, and modified starch.

Examples of the gum include xanthan gum, native gellan gum, deacylated gellan gum, carrageenan, locust bean gum, tara gum, guar gum, gum arabic, tamarind gum, and psyllium seed gum.

Examples of the modified starch include hydroxypropyl starch, acetylated oxidized starch, sodium octenylsuccinate starch, acetic acid starch, oxidized starch, hydroxypropyl distarch phosphate, and phosphorated starch.

These gelling agents may be used alone or two or more of them may be used in combination.

The gelling agent according to the present invention may contain native gellan gum from the viewpoint of obtaining a texture with elasticity close to that of the heat-coagulated egg.

The content of the gelling agent according to the present invention is favorably 0.5 mass% or more, more favorably 1 mass% or more, from the viewpoint of supplementing the gelation property of the extracted protein of a bean. Further, the content is favorably 5 mass% or less, more favorably 3 mass% or less, from the viewpoint of maintaining the fluidity of the liquid egg-substitute composition before heating and obtaining a soft texture close to that of the heat-coagulated egg.

### <Other raw materials>

The liquid egg-substitute composition according to the present invention may contain a raw material other than the above as long as the effects of the present invention are not impaired. Examples of such a raw material include seasonings such as soy sauce, salt, pepper, and an amino acid,
a saccharide such as granulated sugar, white sugar, brown sugar, fructose corn syrup, starches other than modified starch, dextrin, fructose, trehalose, glucose, lactose, oligosaccharide, and sugar ethanol,
a bacteriostatic agent such as glycine and sodium acetate,
a pH adjuster such as organic acid and organic acid salt,
a preservative,
an antioxidant, and
a flavoring agent.

### <Method of producing liquid egg-substitute composition>

A method of producing the liquid egg-substitute composition according to the present invention includes, for example, a step of preparing an extracted protein of a bean of the species white Phaseolus vulgaris or the species Vigna mungo; and a step of preparing a liquid egg-substitute composition such that it contains 6 mass% or more and 17 mass% or less of the extracted protein of a bean.

### <Step of preparing extracted protein of bean>

In this step, an extracted protein of a bean of the species white Phaseolus vulgaris or the species Vigna mungo is prepared by a method such as purchasing a commercially available extracted protein of a bean or extracting a protein from a bean raw material in accordance with a conventional method.

Examples of the method of extracting a protein include the following methods. First, a bean raw material is pretreated as necessary. As the pretreatment, for example, the bean raw material may be pulverized into a powder. Alternatively, in the case where it is not pulverized into a powder, the pulverized bean raw material may be immersed in water or the like. Note that since the bean of the species white Phaseolus vulgaris or the species Vigna mungo has a nearly white outer skin, the outer skin does not need to be removed. However, the outer skin may be removed as necessary. Subsequently, a protein is eluted from the bean raw material. For the elution of the protein, for example, an alkaline eluent containing sodium hydroxide or the like can be used. After that, insoluble materials are removed as necessary, and the protein dissolved in the eluate are precipitated. For the precipitation of the protein, an acid such as hydrochloric acid can be used. Then, after the precipitate is collected by centrifugation, filtration, or the like, the precipitate is neutralized as necessary to obtain an extracted protein of a bean.

Note that enzyme treatment such as transglutaminase treatment for enhancing the gelation property may be performed as necessary on the extracted protein.

### <Preparation step>

In this step, the extracted protein of a bean, water, and other raw materials are stirred and mixed to prepare a liquid egg-substitute composition. The extracted protein of a bean is prepared to be 6 mass% or more and 17 mass% or less.

Note that after the preparation step, a heat sterilization step may be performed as necessary.

In this way, the liquid egg-substitute composition according to the present invention is produced.

The present invention will be specifically described below on the basis of Examples and Comparative Examples. Note that the present invention is not limited to these.

### (Example)

### <Test Example 1: Examination using material containing extracted protein>

A plurality of materials containing an extracted protein in which different extracted proteins of a bean are dispersed in water was prepared and evaluated for whether or not it has a property suitable for a liquid egg-substitute composition.

### (Preparation of material containing extracted protein of bean)

First, bean raw materials were prepared.

As beans of the genus Vigna, an adzuki bean of the species Vigna angularis, a black-eyed pea of the species Vigna unguiculata, a white adzuki bean of the species Vigna angularis, a black adzuki bean of the species Vigna unguiculata, a mung bean of the species Vigna radiata, a black gram bean of the species Vigna mungo, and a black-eyed bean of the species Vigna unguiculata were prepared.

As beans of the genus Phaseolus, an otebo bean of the species white Phaseolus vulgaris, an Alubia bean of the species white Phaseolus vulgaris, a taisho-kintoki (Japanese red kidney bean) of the species colored Phaseolus vulgaris, and a toramame (tiger bean) of the species colored Phaseolus vulgaris were prepared.

As a bean of the genus Vicia, a broad bean of the species Vicia faba was prepared.

As a bean of the genus Pisum, a white pea of the species Pisum sativum was prepared.

As a bean of the genus Glycine, a soybean of the species Glycine max was prepared.

As a bean of the genus Cerasus in the family Rosaceae, almond of the species Prunus amygdalus was prepared.

Subsequently, these bean raw materials were pulverized into a powder while leaving the outer skins. Note that as for the black-eyed bean, in addition to the black-eyed bean with the outer skin left, the black-eyed bean pulverized into a powder after removing the outer skin was also prepared.

In each Table, the black-eyed bean with the outer skin left is described as a "black-eyed bean" and the black-eyed bean with the outer skin removed is described as a "black-eyed bean (without outer skin)".

Subsequently, the bean raw material pulverized into a powder was added to an aqueous sodium hydroxide solution of pH 10 to elute the protein.

The supernatant of the protein solution was collected, and hydrochloric acid of pH 4.5 was added to the supernatant to precipitate the protein.

The precipitate was collected and neutralized to pH 7.0 using sodium hydroxide.

This neutralized precipitate was used as an extracted protein of a bean.

The extracted protein of each type of bean was added to pure water and stirred to prepare a material containing the extracted protein, which contains 10% of the extracted protein. The material containing the extracted protein was a suspension of a protein dispersed in pure water.

### (Evaluation of fluidity)

Approximately 3 mL of each type of material containing the extracted protein was poured into the center of a plate having a diameter of approximately 10 cm, and the fluidity at that time was visually evaluated. The results are shown in Table 1. The following criteria were used for the evaluation.

### [Evaluation criteria]

A: It quickly spread over the entire plate and had fluidity equivalent to that of the liquid egg
B: It spread over the entire plate more slowly than A
C: It did not spread over the entire plate and did not have fluidity similar to that of the liquid egg

**[Table 1]**

| | Genus Vigna (Vigna) | | | | | | | |
|---|---|---|---|---|---|---|---|---|
| | Species Vigna angularis | Species Vigna unguiculata | Species Vigna angularis | Species Vigna unguiculata | Species Vigna radiata | Species Vigna mungo | Species Vigna unguiculata | Species Vigna unguiculata |
| | Adzuki bean | Black-eyed pea | White adzuki bean | Black adzuki bean | Mung bean | Black gram bean | Black-eyed bean | Black-eyed bean (without outer skin) |
| Fluidity | C | C | C | C | A | A | A | A |
| Gelation property | A | A | B | B | C | A | A | C |
| Color tone | C | C | A | C | B | B | C | B |
| Flavor | C | C | C | C | B | A | C | C |
| | | | | | | | | |

| | Genus Phaseolus(Phaseolus) | | | | Genus Vicia (Vicia) | Genus Pisum (Pisum) | Genus Glycine (Glycine) | GenusCerasus in family Rosaceae |
|---|---|---|---|---|---|---|---|---|
| | Species (White) Phaseolus vulgaris | Species (White) Phaseolus vulgaris | Species (colored) Phaseolus vulgaris | Species (colored) Phaseolus vulgaris | Species Vicia faba | Species Pisum sativum | Species Glycine max | Species Prunus amygdalus |
| | Otebo bean | Alubia bean | Taisho-kintoki | Toramame (Tiger bean) | Broad bean | White pea | Soybean | Almond |
| Fluidity | A | B | C | C | C | A | A | C |
| Gelation property | A | A | A | A | B | C | B | C |
| Color tone | A | B | C | C | C | A | B | A |
| Flavor | A | B | C | C | C | B | C | C |

As shown in Table 1, the material containing the extracted protein of each of the mung bean, the black gram bean, the black-eyed bean (with outer skin), the black-eyed bean (without outer skin), the otebo bean, the white pea, and the soybean had fluidity equivalent to that of the liquid egg, and was evaluated as A. The material containing the extracted protein of the Alubia bean was more difficult to flow than these, but had fluidity and was evaluated as B. Each of the materials containing the extracted protein of the other beans had poor fluidity and was evaluated as C.

### (Heating of material containing extracted protein and evaluation of gelation property)

Approximately 100 mL of the material containing the extracted protein was transferred to a cylindrical heat-resistant container having a diameter of approximately 4 cm and was heated in a hot bath of 90°C for 40 minutes.

The material containing the extracted protein after heating was transferred from the heat-resistant container to a plate, and the gelation property thereof was visually evaluated. The results are shown in Table 1. The following criteria were used for the evaluation.

### [Evaluation criteria]

A: It was entirely gelated by heating
B: It was partially gelated but partially liquid or pasty
C: It did not gelate and was substantially entirely liquid or pasty

As shown in Table 1, the material containing the extracted protein of each of the adzuki bean, the black-eyed pea, the black gram bean, the black-eyed bean (with outer skin), the otebo bean, the Alubia bean, the taisho-kintoki (Japanese red kidney bean), and the toramame (tiger bean) after heating was entirely gelated while maintaining the cylindrical shape, and was evaluated as A. Regarding each of the white adzuki bean, the black adzuki bean, the broad bean, and the soybean, although a partially gelated portion was observed, a liquid or pasty portion spread around it and the evaluation was B. Regarding each of the mung bean, the black-eyed bean without an outer skin, the white pea, and the almond, it was substantially entirely liquid or pasty and evaluated as C.

### (Evaluation of color tone of material containing extracted protein after heating)

The color tone of the material containing the extracted protein after heating was visually evaluated. The results are shown in Table 1. The following criteria were used for the evaluation.

### [Evaluation criteria]

A: It was white or pale yellow (light yellow)
B: It was light color based on white or yellow but darker than A
C: Dark color such as brown, black, and gray

As shown in Table 1, the material containing the extracted protein of each of the white adzuki bean, the otebo bean, the white pea, and the almond after heating was white or pale yellow and was evaluated as A. Regarding the material containing the extracted protein after heating, the mung bean, the black gram bean, and the soybean were yellow, the black-eyed bean without an outer skin was pale green, and the Alubia bean was pale orange, and these were evaluated as B. Regarding the material containing the extracted protein after heating, the adzuki bean, the black-eyed pea, the taisho-kintoki (Japanese red kidney bean), the toramame (tiger bean), and the broad bean are brown, the black adzuki bean was black, and the black-eyed bean was gray, and these were evaluated as C.

### (Evaluation of flavor of material containing extracted protein after heating)

Subsequently, part of the material containing the extracted protein after heating was eaten, and the flavor thereof was evaluated. The results are shown in Table 1. The following criteria were used for the evaluation.

### [Evaluation criteria]

A: No beany flavor was felt
B: Slight beany flavor was felt
C: Strong beany flavor was felt

As shown in Table 1, no beany flavor was felt from the material containing the extracted protein of each of the black gram bean and the otebo bean after heating, and they were evaluated as A. Slight beany flavor was felt from the material containing the extracted protein of each of the mung bean, the Alubia bean, and the white pea after heating, and they were evaluated as B. Strong beany flavor was felt from the material containing the extracted protein of the other beans after heating, and they were evaluated as C.

### (Summary of Test Example 1)

In the Test Example 1, the fluidity before heating and the gelation property, color tone, and flavor after heating of the materials containing the extracted protein of a plurality of types of beans were evaluated.

In the case where the fluidity of the material containing the extracted protein is evaluated as C, it becomes difficult to cook the liquid egg-substitute composition as a liquid egg substitute. For this reason, the fluidity of the material containing the extracted protein is favorably evaluated as A or B.

In the case where the gelation property of the material containing the extracted protein is evaluated as C, there is a possibility that a cooked product like a heat-coagulated egg cannot be made because the material containing the extracted protein is not gelated even if it is heated. Further, even if a large amount of a gelling agent is added to such a material containing an extracted protein, there is a possibility that the texture becomes unnatural or the fluidity before heating decreases. For this reason, the gelation property of the material containing the extracted protein is favorably evaluated as A or B.

In the case where the color tone of the material containing the extracted protein is evaluated as C, it is difficult to reproduce yellow color tone similar to that of the heat-coagulated egg even if a colorant is used. For this reason, the color tone of the material containing the extracted protein is favorably evaluated as A or B.

In the case where the flavor of the material containing the extracted protein is evaluated as C, the beany flavor is strong when it is cooked with heat, and it is difficult to prepare a substitute for a heat-coagulated egg.

From the above results, it was found that the material containing the extracted protein of each of the black gram bean, the otebo bean, and the Alubia bean, which was evaluated as A or B for the gelation property, fluidity, color tone, and flavor, was suitable as a liquid egg-substitute composition.

In particular, the gelation property, fluidity, color tone, and flavor of the material containing the extracted protein of the otebo bean were all evaluated as A, and it was found that the material containing the extracted protein of the otebo bean was more suitable as a liquid egg-substitute composition.

### <Test Example 2: Examination of content of extracted protein>

Similarly to the Test Example 1, a protein was extracted from the otebo bean, and the protein was dispersed in pure water such that the content thereof differs as shown in Table 2 to prepare a material containing the extracted protein. As shown in Table 2, the concentration of the extracted protein was 5% or more and 20% or less.

**[Table 2]**

| | Concentration of extracted protein (%) | | | | | | | | | |
|---|---|---|---|---|---|---|---|---|---|---|
| | 5 | 6 | 7 | 8 | 9 | 10 | 12 | 14 | 15 | 20 |
| Fluidity | A | A | A | A | A | A | A | A | B | C |
| Gelation property | C | B | B | A | A | A | A | A | A | A |

### (Evaluation of fluidity)

The fluidity of the material containing the extracted protein was evaluated in the same manner as that in the Test Example 1. The results are shown in Table 2. Criteria similar to those in the Test Example 1 were used for the evaluation.

As shown in Table 2, the material containing the extracted protein, which contains 5% or more and 14% or less of the extracted protein, had fluidity equivalent to that of the liquid egg and was evaluated as A. The material containing the extracted protein, which contains 15% of the extracted protein, was evaluated as B, and the material containing the extracted protein, which contains 20% of the extracted protein, had poor fluidity and was evaluated as C.

### (Evaluation of gelation property)

Subsequently, similarly to the Test Example 1, the material containing the extracted protein was heated in a hot bath of 90°C for 40 minutes, and the gelation property of the material containing the extracted protein after heating was visually evaluated. The results are shown in Table 2. Criteria similar to those in the Test Example 1 were used for the evaluation.

As shown in Table 2, the material containing the extracted protein after heating, which contains 6% or more and 20% or less of the extracted protein, was entirely or partially gelated and was evaluated as A or B. The material containing the extracted protein after heating, which contains 5% of the extracted protein, was substantially entirely liquid or pasty and was evaluated as C.

### (Summary of Test Example 2)

From the above, it was found that a liquid egg-substitute composition whose fluidity is evaluated as A or B and gelation property after heating is evaluated as A or B was obtained by setting the content of the extracted protein of a bean to 6% or more and 17% or less.

### <Test Example 3: Examination of liquid egg-substitute composition>

As a Test Example 3, liquid egg-substitute compositions containing an extracted protein of a bean were prepared. Then, these liquid egg-substitute compositions were heated to prepare cooked products like a scrambled egg, and the appearance and flavor thereof were evaluated.

### (Example 1)

Similarly to the Test Example 1, a protein was extracted from the otebo bean. This extracted protein of the otebo bean and raw materials shown in Table 3 were mixed to prepare a liquid egg-substitute composition according to an Example 1. The content of the extracted protein of a bean was 10%, and the content of the other raw materials was as shown in Table 3.

**[Table 3]**

| Formulation | % |
|---|---|
| Extracted protein of bean | 10 |
| Soybean oil (edible fats and oils) | 4 |
| Paprika oil | 1 |
| Palm olein | 1 |
| Soybean lecithin | 0.5 |
| Native gellan gum | 1 |
| Curdlan | 0.5 |
| Agar | 0.2 |
| Salt | 0.3 |
| Sodium glutamate | 0.2 |
| Water | 81.3 |

### (Example 2)

A liquid egg-substitute composition according to an Example 2 was prepared in the same manner as that in the Example 1 except that the type of bean was changed to the Alubia bean.

### (Comparative Example 1)

A liquid egg-substitute composition according to a Comparative Example 1 was prepared in the same manner as that in the Example 1 except that the type of bean was changed to the black-eyed pea.

### (Comparative Example 2)

A liquid egg-substitute composition according to a Comparative Example 2 was prepared in the same manner as that in the Example 1 except that the type of bean was changed to the mung bean.

### (Comparative Example 3)

A liquid egg-substitute composition according to a Comparative Example 3 was prepared in the same manner as that in the Example 1 except that the type of bean was changed to the black-eyed bean without an outer skin.

### (Comparative Example 4)

A liquid egg-substitute composition according to a Comparative Example 4 was prepared in the same manner as that in the Example 1 except that the type of bean was changed to the soybean.

### (Evaluation of fluidity)

Approximately 3 mL of the liquid egg-substitute composition according to each of the Examples 1 and 2 and the Comparative Examples 1 to 4 was poured into the center of a plate having a diameter of approximately 10 cm, and the fluidity at that time was visually evaluated. The results are shown in Table 4. Criteria similar to those in the Test Example 1 were used for the evaluation.

**[Table 4]**

| | Example 1 | Example 2 | Comparative Example 1 | Comparative Example 2 | Comparative Example 3 | Comparative Example 4 |
|---|---|---|---|---|---|---|
| | Species (White) Phaseolus vulgaris | Species (White) Phaseolus vulgaris | Species Vigna unguiculata | Species Vigna radiata | Species Vigna unguiculata | Species Glycine max |
| | Otebo bean | Alubia bean | Black-eyed pea | Mung bean | Black-eyed bean (without outer skin) | Soybean |
| Fluidity | A | B | C | A | A | A |
| Gelation property | A | A | A | C | C | B |
| Color tone | A | B | C | B | B | B |
| Flavor | A | B | C | B | C | C |

As shown in Table 4, the liquid egg-substitute compositions according to the Example 1 in which the otebo bean is contained, the Comparative Example 2 in which the mung bean is contained, the Comparative Example3 in which the black-eyed bean without an outer skin is contained, and the Comparative Example 4 in which the soybean is contained all had fluidity equivalent to that of the liquid egg, and were evaluated as A. The liquid egg-substitute composition according to the Example 2 in which the Alubia bean is contained was difficult to flow than the liquid egg, but had fluidity and was evaluated as B. Meanwhile, the liquid egg-substitute composition according to a Comparative Example 1 in which the black-eyed pea is contained had poor fluidity and was evaluated as C.

### (Heating of liquid egg-substitute composition and evaluation of gelation property)

The liquid egg-substitute composition was heated by a frying pan for one minute while stirring to prepare a cooked product like a scrambled egg.

The gelation property of the cooked product like a scrambled egg after heating was visually evaluated. The results are shown in Table 4. The following criteria were used for the evaluation.

### [Evaluation criteria]

A: It was entirely gelated by heating and had hardness equivalent to that of the scrambled egg
B: It was gelated by heating, but was softer than A
C: It was liquid or pasty, and was completely different from the scrambled egg

As shown in Table 4, each of the cooked products like a scrambled egg according to the Example 1 in which the otebo bean is contained, the Example 2 in which the Alubia bean is contained, and the Comparative Example 1 in which the black-eyed pea is contained was entirely gelated like the scrambled egg, and was evaluated as A. The cooked product like a scrambled egg according to the Comparative Example 4 in which the soybean is contained was partially liquid or pasty and was evaluated as B. Each of the cooked products like a scrambled egg according to the Comparative Example 2 in which the mung bean is contained and the Comparative Example 3 in which the black-eyed bean without an outer skin is contained was largely liquid or pasty and was evaluated as C.

### (Evaluation of color tone of cooked product like scrambled egg)

Subsequently, the color tone of the cooked product like a scrambled egg was visually evaluated. The results are shown in Table 4. The following criteria were used for the evaluation.

### [Evaluation criteria]

A: It was bright yellow equivalent to that of the scrambled egg
B: It had color tone that is based on yellow but slightly different from that of the scrambled egg
C: It had a color other than yellow, which was completely different from that of the scrambled egg

As shown in Table 4, the cooked product like a scrambled egg according to the Example 1 in which the otebo bean is contained was bright yellow equivalent to that of the scrambled egg and was evaluated as A. Each of the cooked products like a scrambled egg according to the Example 2 in which the Alubia bean is contained, the Comparative Example 2 in which the mung bean is contained, the Comparative Example 3 in which the black-eyed bean without an outer skin is contained, and the Comparative Example 4 in which the soybean is contained had color tone that is based on yellow but slightly different from that of the scrambled egg, and was evaluated as B. The cooked product like a scrambled egg according to the Comparative Example 1 in which the black-eyed pea is contained was brown and was evaluated as C.

### (Evaluation of flavor of cooked product like scrambled egg)

Subsequently, part of the cooked product like a scrambled egg was eaten, and the flavor thereof was evaluated. The results are shown in Table 4. The following criteria were used for the evaluation.

### [Evaluation criteria]

A: No beany flavor was felt, and flavor similar to that of the scrambled egg was felt
B: Slight beany flavor was felt, but flavor close to that of the scrambled egg was felt
C: Strong beany flavor was felt, and flavor completely different from that of the scrambled egg was felt

As shown in Table 4, rich flavor similar to that of the scrambled egg was felt from the cooked product like a scrambled egg according to the Example 1 in which the otebo bean is contained, and it was evaluated as A. Slight beany flavor was felt from each of the cooked products like a scrambled egg according to the Example 2 in which the Alubia bean is contained and the Comparative Example 2 in which the mung bean is contained, as compared with the Example 1, but it was not so strange and they were evaluated as B. Beany flavor was left and flavor completely different from that of the scrambled egg was felt from each of the cooked products like a scrambled egg according to the Comparative Example 1 in which the black-eyed pea is contained, the Comparative Example 3 in which the black-eyed bean without an outer skin is contained, and the Comparative Example 4 in which the soybean is contained, and they were evaluated as C.

### (Summary of Test Example 3)

In the Test Example 3, the fluidity before heating of the liquid egg-substitute compositions containing a plurality of types of beans and the gelation property, color tone, and flavor after heating of the cooked products like a scrambled egg were evaluated.

In the case where the fluidity of the liquid egg-substitute composition is evaluated as C, it becomes difficult to use the liquid egg-substitute composition for cooking as a liquid egg substitute. For this reason, the fluidity of the liquid egg-substitute composition is favorably evaluated as A or B.

In the case where the gelation property of the cooked product like a scrambled egg is evaluated as C, appearance equivalent to that of the scrambled egg cannot obtained, and it is necessary to perform treatment such as further adding a gelling agent and enhancing the gelation property. This may result in an unnatural texture, a decrease in fluidity before heating, or an increase in production cost. For this reason, the gelation property of the cooked product like a scrambled egg is favorably evaluated as A or B.

In the case where the color tone of the cooked product like a scrambled egg is evaluated as C, color tone equivalent to that of the scrambled egg cannot be reproduced, and the appearance is completely different from that of the scrambled egg. For this reason, the color tone of the cooked product like a scrambled egg is favorably evaluated as A or B.

In the case where the flavor of the cooked product like a scrambled egg is evaluated as C, the flavor is completely different from that of the scrambled egg. For this reason, the flavor of the cooked product like a scrambled egg is favorably evaluated as A or B.

From the above results, it was found that the liquid egg-substitute compositions according to the Examples 1 and 2 in which the gelation property, fluidity, color tone, and flavor are evaluated as A or B were more excellent as liquid egg substitutes capable of preparing heat-coagulated eggs than the liquid egg-substitute composition according to the Comparative Examples 1 to 4.

In particular, the liquid egg-substitute composition containing the extracted protein of the otebo bean had a gelation property, fluidity, color tone, and flavor, which were all evaluated as A, and was found to be very suitable as a liquid egg substitute for preparing a heat-coagulated egg.

## Claims

1. A liquid egg-substitute composition, comprising:
6 mass% or more and 17 mass% or less of an extracted protein of a bean of a species white Phaseolus vulgaris or a species Vigna mungo.

2. The liquid egg-substitute composition according to claim 1, wherein
the bean is a bean of the species white Phaseolus vulgaris.

3. The liquid egg-substitute composition according to claim 2, wherein
the bean is an otebo bean.

4. The liquid egg-substitute composition according to any one of claims 1 to 3, further comprising
3 mass% or more and 15 mass% or less of a lipid.

5. The liquid egg-substitute composition according to any one of claims 1 to 4, further comprising
a fat-soluble colorant.

6. A heat-coagulated product of the liquid egg-substitute composition according to any one of claims 1 to 5.
